(19) Europäisches Patentamt
European Patent Office
Office européen des brevets

(11) **EP 4 167 198 B1**

(12) **EUROPEAN PATENT SPECIFICATION**

(45) Date of publication and mention
of the grant of the patent:
**02.08.2023 Bulletin 2023/31**

(21) Application number: **21202710.6**

(22) Date of filing: **14.10.2021**

(51) International Patent Classification (IPC):
*G06V 40/40* *(2022.01)*     *G06V 40/16* *(2022.01)*
*G06F 18/00* *(2023.01)*

(52) Cooperative Patent Classification (CPC):
**G06V 40/161; G06V 40/45;** G06V 40/171

(54) **METHOD AND SYSTEM FOR DETECTING A SPOOFING ATTEMPT**

VERFAHREN UND SYSTEM ZUR DETEKTION EINES SPOOFING-VERSUCHS

PROCÉDÉ ET SYSTÈME DE DÉTECTION D'UNE TENTATIVE DE MYSTIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.04.2023 Bulletin 2023/16**

(73) Proprietor: **Axis AB**
**223 69 Lund (SE)**

(72) Inventors:
• **Benderius, Björn**
**223 69 LUND (SE)**
• **Jönsson, Jimmie**
**223 69 LUND (SE)**
• **Jeppsson, Karlin Johan**
**223 69 LUND (SE)**

• **Svensson, Niclas**
**223 69 LUND (SE)**
• **Muhrbeck, Andreas**
**223 69 LUND (SE)**

(74) Representative: **AWA Sweden AB**
**Box 5117**
**200 71 Malmö (SE)**

(56) References cited:
**EP-A2- 2 680 191     US-A1- 2018 181 737**

• **SOOYEON KIM ET AL: "Face Liveness Detection
Using Defocus", SENSORS, vol. 15, no. 1, 14
January 2015 (2015-01-14), pages 1537-1563,
XP055492488, DOI: 10.3390/s150101537**

**Description**

Technical field

The present invention relates to the field of systems for surveillance and physical access control using cameras. More particularly, the invention relates to such systems employing object detection, object recognition, face detection, or face recognition, and to detecting attempts to trick or fool such systems.

Background

In surveillance systems, as well as physical access control systems, cameras are often used to be able to detect and/or recognise objects. The objects the system detects or recognises may be any kind of objects. For instance, face detection and face recognition algorithms may be employed in surveillance systems and particularly in physical access control systems.

Some physical access control systems include door stations with cameras. When a visitor arrives, e.g., at the gate of a factory, a receptionist or a guard inside the factory may watch still images or video captured by the door station camera to see if the visitor is someone who should be allowed in. In some systems, face recognition may be automated, such that if the visitor has been preregistered with images, the system may automatically let the visitor in if images captured by the camera can be matched with the preregistered images. In the manual scenario, as well as in the automated scenario, a dishonest person may try to gain access by attempting to spoof the system. By holding up a printed or digital photo of a person who is allowed to enter, the intruder may trick a person looking at images captured by the door station camera, or a face detection algorithm analysing the images.

Methods have been developed for detecting such spoofing attempts. Such methods are often referred to as liveness detection methods, as they aim to detect if a face in an image is a real, live face, or a still photo of a face.

As an example, Kim et al. (Kim, S.; Ban, Y.; Lee, S. Face Liveness Detection Using Defocus. Sensors 2015, 15, 1537-1563) disclose a liveness detection method in which images are taken with different focus settings. From two images sequentially taken at different focuses, three features are extracted. These features are focus, power histogram, and gradient location and orientation histogram (GLOH). In one image, focus is on the nose of the face, and in another image, focus is on an ear. The images are classified using a feature level fusion approach.

As another example, US 2020/0218886 discloses a facial anti-spoofing method in which focus values are determined for various areas of a face during a focus sweep of the camera. From the focus values, a depth map for the image may be generated and analysed to determine a likelihood that the image is authentic.

US 2018/0181737 discloses systems and methods for enrolling and authenticating a user in an authentication system via a user's camera. This document proposes to obtain two images from the camera and to conduct feature recognition on them, tracking a change in position of pixels of the features from a first image to a second image to calculate two-dimensional vectors, comparing a first two-dimensional vector corresponding to a first feature to a first expected value and comparing a second two-dimensional vector corresponding to a second feature to a second expected value, and when the first and second two-dimensional vectors match the first and second expected values within a predetermined range, authenticating the user.

EP 2 680 191 discloses a facial recognition method which includes receiving a first image and a second image of a face of a user, where one or both images have been granted a match by facial recognition. The method further includes detecting a liveness gesture based on at least one of a yaw angle of the second image relative to the first image and a pitch angle of the second image relative to the first image. The method further includes generating a liveness score based on a yaw angle magnitude and/or a pitch angle magnitude, comparing the liveness score to a threshold value, and determining, based on the comparison, whether to deny authentication to the user.

The known methods each have strengths and weaknesses. One weakness is that they are oftentimes fairly complex. Another is that they require a varifocal camera. A method that may avoid some of those weaknesses is still needed.

Summary of the invention

It is an object of the invention to provide an efficient method for detecting spoofing attempts against a surveillance system or physical access control system. It is also an object of the invention to provide a method that may quickly detect if a detected object is fake. Another object is to provide a method that can be performed in a varifocal camera as well as a fix focus camera. An additional object of the invention is to provide a system for detecting if an object detected in a surveillance or access control system comprising a camera is fake, which overcomes drawbacks of prior art systems.

The invention is defined by the independent claims.

According to a first aspect, these objects are achieved, in full or at least in part, by a method for detecting if an object detected in a surveillance or access control system comprising a camera is a two-dimensional representation and not a real three-dimensional object, or in other words fake, the method comprising: capturing a first image by the camera, using a first focus setting and a first aperture size, detecting the object in the first image, determining a first protrusion focus measure in a protrusion area of the object in the first image, determining a first recess focus measure in a recess area of the object in the first image, capturing a second image by the camera, using the first focus setting and a second aperture size which is different from the first aperture size, detecting the object in the second image, determining a second protrusion focus measure in a protrusion area of the object in the second image, determining a second recess focus measure in a recess area of the object in the second image, calculating a protrusion focus difference between the first and second protrusion focus measures, calculating a recess focus difference between the first and second recess focus measures, comparing the protrusion focus difference and the recess focus difference, and if the protrusion focus difference and the recess focus difference differ by less than a predetermined threshold amount, determining that the object is a two-dimensional representation and not a real three-dimensional object. In the following, this will also be referred to as determining that the object is fake. By such a method, it is possible to detect spoofing attempts in an effective manner. Unlike some prior art methods, the inventive method is not limited to varifocal cameras, but can be used also with fix focus cameras. The inventive method may be implemented with reduced complexity compared to some prior art methods. As the focus setting is the same when taking the second image as when taking the first image, there is no need to operate any focus motor and therefore focus need not be lost in any significant number of images. In order to further reduce the risk of annoying loss of focus, if the focus setting in the camera is adjustable, adjustment of the focus setting may be blocked while the aperture size is being changed for detecting a possible spoofing attempt.

As used herein, the term "focus difference" should be understood to include an absolute difference as well as a relative difference. Thus, the focus differences may be calculated as a first focus measure minus a second focus measure (or vice versa), or as the first focus measure minus the second focus measure (or vice versa) and then dividing this result by either the first or the second focus measure.

The object is a face. The protrusion area is an area corresponding to a nose area of the face, and the recess area is an area corresponding to an ear, cheek, chin, or forehead area of the face. By choosing the nose area as the protrusion area, it may be expected that all other areas of the face should be at a different distance from the camera, as seen along an optical axis of the camera. It would, however, also be possible to choose, e.g., a forehead area as the protrusion area and to choose any area expected to be at a different distance from the camera than the forehead as the recess area. For instance, if the forehead area is used as the protrusion area, an ear area could be used as the recess area.

The method may be modified to further comprise determining a first additional focus measure in an additional area of the object in the first image, determining a second additional focus measure in an additional area of the object in the second image, calculating an additional focus difference between the first and second additional focus measures, comparing the additional focus difference and at least one of the protrusion focus difference and the recess focus difference, and if the additional focus difference and said at least one of the protrusion focus difference and the recess focus difference differ by less than a predetermined threshold amount, determining that the object is fake. This may provide higher certainty in being able to detect a spoofing attempt. For example, if someone were to hold up a photo of a face to the camera and hold the photo at an angle, one cheek may indeed appear further away from the camera than the nose, as expected from a real face, such that the spoofing attempt might succeed. By checking an additional area, such as the forehead, it may be found that the focus measure for the forehead differs by too little from the focus measure for the nose, such that the spoofing attempt may be detected, and the photo of the face be determined to be a fake face.

The focus measures may be determined using a contrast detection algorithm. Such algorithms may already be implemented in the camera for purposes of autofocus, thereby reducing the need to add complexity and cost to the camera.

The focus measures may be determined using an algorithm chosen from the group consisting of a Sobel algorithm, a Laplacian algorithm, a Gaussian algorithm, a Scharr algorithm, a Roberts algorithm, a Prewitt algorithm, a Brenner algorithm, a Tenengrad algorithm, a histogram algorithm, a Vollath algorithm, a frequency analysis algorithm using FFT, and a frequency analysis algorithm using DCT. Such algorithms are familiar to the skilled person.

In some variants of the method, the steps of determining focus measures, calculating focus differences, and comparing focus differences are performed by a neural network. This may be an efficient way of determining the focus measures, calculating the focus differences, and comparing those focus differences.

The method may further comprise marking the second image as a non-display image. In this manner, changes in focus caused by the change in aperture size will not be noticeable to a person viewing the captured images. A return to the first aperture size may be made as soon as the second image has been captured.

According to a second aspect, the abovementioned objects are achieved, in full or at least in part, by a system for detecting if an object detected in a surveillance or access control system comprising a camera is a two-dimensional representation and not a real three-dimensional object, the system comprising: an aperture setting controller arranged to control an aperture setting of the camera, an image capture initiator arranged to initiate capture of a first image, and a second image, wherein the aperture setting controller is arranged to control the aperture setting such that the first image is captured using a first aperture setting and the second image is captured using a second aperture setting, which is different from the first aperture setting, the system further comprising: an object detector arranged to detect an object in the first and second images, a focus determinator arranged to determine a first protrusion focus measure in a protrusion area of the object in the first image, a first recess focus measure in a recess area of the object in the first image, a second protrusion focus measure in a protrusion area of the object in the second image, and a second recess focus measure in a recess area of the object in the second image, a focus difference calculator arranged to calculate a protrusion focus difference between the first and second protrusion focus measures, and a recess focus difference between the first and second recess focus measures, a focus difference comparator arranged to compare the protrusion focus difference and the recess focus difference, and an evaluator arranged to determine that the object is a two-dimensional representation and not a real three-dimensional objectif the protrusion focus difference and the recess focus difference differ by less than a predetermined threshold amount. Such a system makes it possible to quickly and efficiently determine if an object is fake. The system may be used with varifocal cameras as well as fix focus cameras. By using variations in aperture setting, the system avoids the need to change focus setting. Hence, no focus motor needs to be operated.

The object detector is a face detector. The protrusion area is an area corresponding to a nose area of the face, and the recess area is an area corresponding to an ear, cheek, chin, or forehead area of the face. The invention is particularly useful in surveillance systems and physical access control systems in which face recognition is used. By being able to detect if a face in images is fake, it is possible to detect if someone is trying to trick the system, e.g., into letting an unauthorised person or unwelcome visitor into a building.

The system according to the second aspect may be embodied in essentially the same ways as the method of the first aspect with accompanying advantages.

According to a third aspect, the abovementioned objects are achieved, in full or at least in part, by a camera comprising a system according to the second aspect.

According to a fourth aspect, the abovementioned objects are achieved, in full or at least in part, by a non-transitory computer readable storage medium having stored thereon instructions for implementing the method according to the first aspect, when executed on a device having processing capabilities.

A further scope of applicability of the present invention will become apparent from the detailed description given below. However, it should be understood that the invention is not limited to the disclosed exemplary embodiments, but by the scope of the following claims.

Hence, it is to be understood that this invention is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, a reference to "an item" or "the item" may include several items, and the like. Furthermore, the word "comprising" does not exclude other elements or steps.

Brief description of the drawings

The invention will now be described in more detail by way of example and with reference to the accompanying schematic drawings, in which:

Fig. 1 is an illustration of a person standing in front of a door station,
Fig. 2 is an illustration of a person standing in front of a door station and holding up a photo of another person,
Fig. 3 shows a first image and a second image of the person in Fig. 2,
Fig. 4 is a flow chart showing the steps of a method for detecting if an object detected in a surveillance or access control system comprising a camera is fake,
Fig. 5 is a block diagram of a system for detecting if an object detected in a surveillance or access control system comprising a camera is fake, and Fig. 6 is a block diagram of a camera comprising the system in Fig. 5.

Detailed description of embodiments

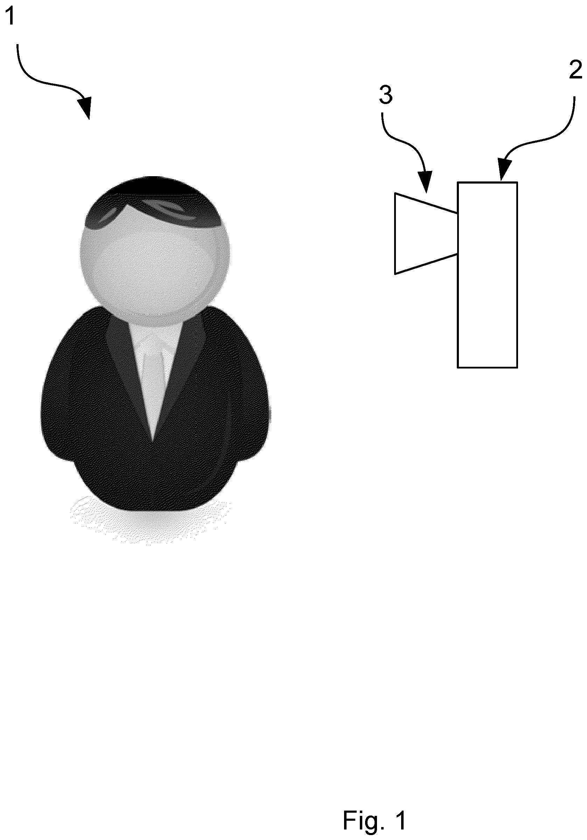

In Fig. 1, a scenario is shown in which a person 1 is standing in front of a door station 2. The door station has a camera 3 that can be used for taking images of anyone standing in front of the door station. The images may be still images or video sequences. As noted in the background section above, such images may be used for determining who the person at the door station is. This may be done manually, by a receptionist or guard watching the images, or it may be done automatically, by a face recognition algorithm.

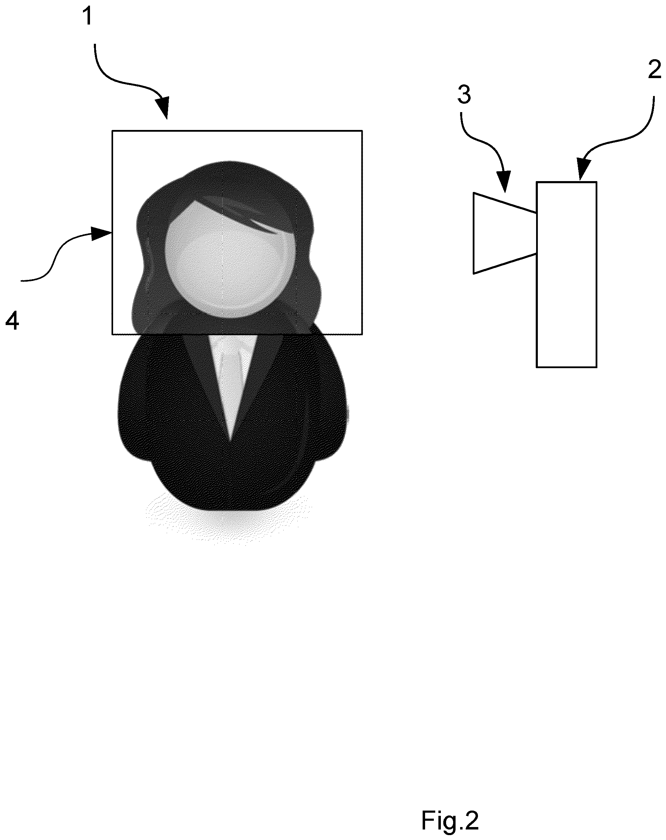

Let us assume that the person 1 standing at the door station 2 is in fact not supposed to be allowed to enter. The person 1 may in such case try to gain entry by attempting to trick the receptionist or guard, or the face recognition algorithm. As shown in Fig. 2, the person 1 may attempt to spoof the system by holding up a photo 4 of another person, who is trusted to enter. If the photo is of high enough quality, it may appear as though the trusted person is standing in front of the door station 2.

Thus, the receptionist or guard may decide to let the unwelcome person 1 in. Similarly, a face recognition algorithm may unintentionally let the unwelcome person 1 in. By means of the invention, such spoofing attempts may be automatically detected. Examples of how such method and system may be embodied will now be described.

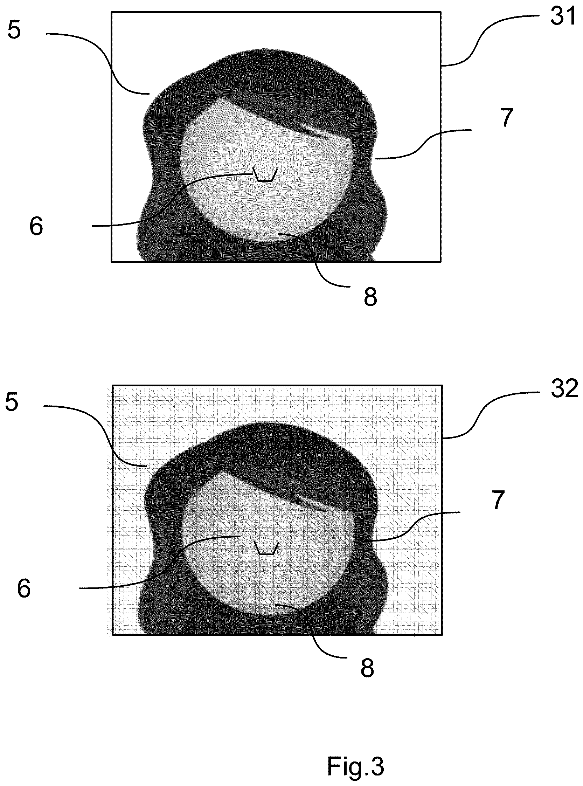

The camera 3 captures a first image 31, shown in Fig. 3. When capturing the first image 31, the camera 3 uses a first focus setting, adapted for focusing on a person 1 standing at an expected distance in front of the door station 2. Additionally, the camera 3 uses a first aperture size. The first aperture size may be a default aperture size for the camera 3, or it may be specifically chosen for the lighting conditions at the door station 2 and for providing a desired depth of field to be able to focus on a person standing in front of the door station 2. For instance, the first aperture size may be set such that a depth of field is achieved which gives acceptable focus on the person 1 even when standing slightly closer to or slightly further away from the door station 2 than expected. The depth of field need not enable focus at distances further away from the door station than a person can reasonably be expected to stand when interacting with the door station 2. In this way, monitoring of a wider area than intended around the door station 2 can be prevented.

A face detection algorithm in the camera 3 is used for detecting the face 5 of the person 1 appearing before the door station 2, and the nose area 6 and an ear area 7 of the face are located. The nose and ear areas are chosen because they represent a protrusion area and a recess area, respectively, of the face. Other areas of the face may be chosen, as long as one of them is an area that is expected to protrude in relation to another of the chosen areas. For example, the forehead may be chosen as a protrusion area and an ear as a recess area, or the nose may be chosen as a protrusion area and a cheek or the chin as a recess area.

When the nose area has been located, a focus measure is determined for this area. This will in the following be referred to as a protrusion focus measure since the nose has been chosen as protrusion area. The focus measure for the nose area in the first image will be referred to as a first protrusion focus measure $F_{p1}$.

Similarly, a focus measure is determined for the ear area. This will be referred to as a recess focus area since the ear has been chosen as recess area. The focus measure for the ear area in the first image will be referred to as a first recess focus measure $F_{r1}$.

The focus measures are determined using any suitable known focus algorithm, such as a contrast detection algorithm. If the camera 2 has an autofocus function, the same focus determination algorithm may be used as for the autofocus function. Some examples of focus determination algorithms that may be useful are a Sobel algorithm, a Laplacian algorithm, a Gaussian algorithm, a Scharr algorithm, a Roberts algorithm, a Prewitt algorithm, a Brenner algorithm, a Tenengrad algorithm, a histogram algorithm, a Vollath algorithm, a frequency analysis algorithm using FFT, and a frequency analysis algorithm using DCT.

The camera 3 captures a second image 32. For this second image 32, the camera 2 uses the same first focus setting as for the first image 31. However, for the second image 32, the camera 3 uses a second aperture size. The second aperture size may be smaller or larger than the first aperture size, but not equal to the first aperture size. When a different aperture size is used, the depth of field changes. If a larger aperture size is used, the depth of field decreases. Thus, some parts of the image that were in focus with a smaller aperture will now be out of focus. Conversely, if a smaller aperture size is used, the depth of field increases, and some parts of the image that were previously out of focus will now be in focus. In Fig. 3, hatching illustrates schematically that focus has changed.

The face 5 is detected also in the second image 32. A second protrusion focus measure $F_{p2}$ is determined for the nose area of the face 5 in second image 32 and a second recess focus measure $F_{r2}$ is determined for the ear area. These focus measures are determined in the same way as for the first image 31.

When the focus measures have been determined for the first and second images, a protrusion focus difference $\Delta F_p$ is calculated as the difference between the first protrusion focus measure $F_{p1}$ and the second protrusion focus measure $F_{p2}$:

$$\Delta F_p = F_{p1} - F_{p2}$$

Analogously, a recess focus difference $\Delta F_r$ is calculated as the difference between the first recess focus measure $F_{r1}$ and the second recess focus measure $F_{r2}$:

$$\Delta F_r = F_{r1} - F_{r2}$$

Alternatively, the protrusion focus difference and the recess focus difference may be calculated as relative differences. Thus, the protrusion focus difference $\Delta F_r$ may instead be calculated as follows:

$$\Delta F_p = \frac{F_{p1} - F_{p2}}{F_{p1}}$$

Analogously, the recess focus difference $\Delta F_r$ may be calculated as follows:

$$\Delta F_r = \frac{F_{r1} - F_{r2}}{F_{r1}}$$

The protrusion focus difference $\Delta F_p$ is com-

pared to the recess focus difference $\Delta F_r$. If the face is real, the change in focus measure between the first and second images is expected to be different for the nose area and the ear area since the nose is expected to protrude more than the ear, or in other words, the nose is expected to be located closer to the camera, along the optical axis of the camera, than the ear. If, on the other hand, the face is a photo, the change in focus measure will likely be the same for the nose as for the ear, as they are both in the same plane, i.e. the plane of the two-dimensional photo. Therefore, if the protrusion focus difference $\Delta F_p$ differs from the recess focus difference $\Delta F_r$ by less than a predetermined threshold amount $\delta_{th}$, it is determined that the face is not a real three-dimensional face, but only a two-dimensional representation, such as a photo. In other words, it is determined that the face is fake. The principle of comparing to the predetermined threshold amount $\delta_{th}$ is the same whether the focus differences are calculated as absolute or relative differences, but as the skilled person will appreciate, the value of the predetermined threshold amount $\delta_{th}$ will be different depending on if the differences are absolute or relative.

The predetermined threshold amount $\delta_{th}$ may, e.g., be determined empirically by studying focus differences for a number of real faces and for a number of photos, possibly bent or angled to different degrees.

If it has been determined that the face is fake an alert to this effect may be generated. For instance, if a receptionist looking at images from the door station makes the decision to allow or deny entry, a warning message may be displayed as an overlay on the images, such that the receptionist is made aware of the possible intrusion attempt. If an automated process decides if the person should be allowed or denied entry, the alert of the determination that the face is fake may trigger a denial of entry. Additionally, a warning message may be sent to, e.g., a security guard, such that the attempted intrusion may be investigated further.

Added protection against spoofing attempts may be achieved if an additional area of the face is taken into account when studying focus measures. If the nose area was chosen as the protrusion area and an ear area was chosen as the recess area, the other ear, a cheek, the chin, or the forehead may be chosen as an additional area 8. In the first image, a first additional focus measure $F_{a1}$ is determined, in the same way as the protrusion focus measures and recess focus measures discussed above, and in the second image, a second additional focus measure $F_{a2}$ is determined.

An additional focus difference $\Delta F_a$ is calculated as the difference between the first additional focus measure $F_{a1}$ and the second additional focus measure $F_{a2}$:

$$\Delta F_a = F_{a1} - F_{a2}$$

The additional focus difference $\Delta F_a$ is compared to at least one of the protrusion focus difference $\Delta F_p$ and

the recess focus difference $\Delta F_r$. In the same way as described above, it the additional focus difference $\Delta F_a$ differs from the focus difference it is compared to by less than a predetermined threshold amount $\delta_{th}$, it is determined that the object is fake.

By adding an additional area to the analysis, the risk that someone manages to trick the physical access control system by presenting a photo at an angle to the camera may be reduced.

Depending on whether false alarms or missed spoofing attempts are considered more important to avoid, the method may be varied. If false alarms should be avoided as far as possible, it may be determined that the face is fake only if both the comparison of the protrusion focus difference $\Delta F_p$ and the recess focus difference $\Delta F_r$, and the comparison of the additional focus difference $\Delta F_a$ and one of the two other focus differences $\Delta F_p$, $\Delta F_r$ shows that they differ by less than the predetermined threshold amount $\delta_{th}$. If it is deemed more important not to miss any spoofing attempts, it may be determined that the face is fake if at least one of the comparisons shows that the focus differences differ by less than the predetermined threshold amount $\delta_{th}$.

Regardless of the number of areas studied in the images, a neural network may be used for determining the focus measures, for calculating the focus differences, and for comparing the focus differences. If a neural network is used for these method steps, they need not be distinct steps, but could be integrated into each other. Even if a neural network is used, it is not necessary to perform all of the mentioned step by means of the neural network. For instance, the focus measures may be determined by a regular focus measure algorithm and the resulting focus measures may be input to a neural network that determines whether these focus measures indicate that the studied object is real or fake. The neural network may be a deep learning model that has been trained to distinguish between images of real, three-dimensional objects and fake, two-dimensional photos of objects. The deep learning model may be trained in a supervised or unsupervised setting. In a supervised setting, the deep learning model is trained using labelled datasets to classify data or predict outcomes accurately, in this case to classify images as depicting real or fake objects. As input data are fed into the deep learning model, the model adjusts its weights until the model has been fitted appropriately, which occurs as part of a cross validation process. In an unsupervised setting, the deep learning model is trained using unlabelled datasets. From the unlabelled datasets, the deep-learning model discovers patterns that can be used to cluster data from the datasets into groups of data having common properties. Common clustering algorithms are hierarchical, k-means, and Gaussian mixture models. Thus, the deep learning model may be trained to learn representations of data.

As already noted, when the aperture size is altered, the depth of field is also altered. Depending on by how much and in what parts of the image focus is thereby changed, the change in focus may be annoying to a person viewing the images. In order to avoid such annoying focus changes, the second image 32 may be marked as a non-display image when encoding the images. Thereby, both the first image 31 and the second image 32 may be included in a stream transmitted by the camera 3, but only the first image 31 need be displayed to a viewer at the receiving end. The need to mark the second image 32 as a non-display image may be reduced by adjusting an exposure time or gain, either already at the sensor, or in image processing.

In some variants of the method, the first focus setting may be chosen such that it is a little "too close" compared to what would otherwise be used. In order to get a normal image, the first aperture setting may be reduced just a little, such that, e.g., an aperture size of F5.6 is used rather than F2.0 which could normally be expected. In this manner, focus will be in the distance range of interest. For a door station, focus will be at a distance at which a person seeking to enter may be expected to stand. When the detection of a possible spoofing attempt is to be performed, a sweep may be done with the iris or diaphragm of the camera, such that the depth of field is moved from the rear to the front. In this manner, the likelihood of achieving different focus measures at different aperture sizes increases. If instead an "optimal" focus distance is used as the first focus setting, as described above, the difference between different aperture sizes may be smaller, since it is the endpoints of the depth of field that are moved when the aperture size is adjusted.

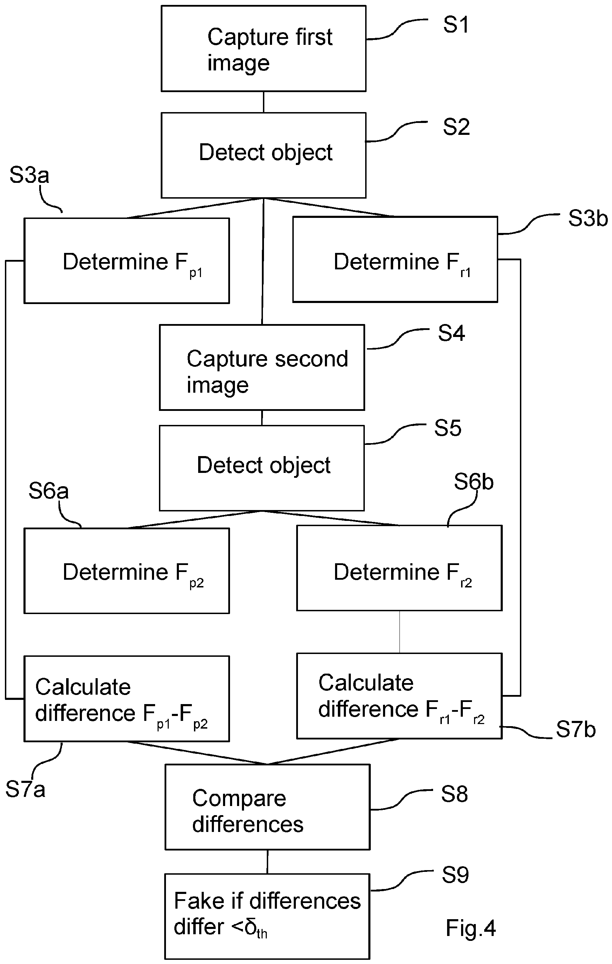

The method for detecting a spoofing attempt will now be summarised with reference to Fig. 4, which is a flow chart showing the steps of an example of the method.

In step S1, a first image is captured, using a first focus setting and a first aperture size. In step S2, an object is detected in the first image. This object may, e.g., be a face, such as in the preceding examples, or another object that it is desired to detect and be able to determine if it is potentially fake. In step S3a, a first protrusion focus measure is determined in a protrusion area of the object. If the object is a face, the protrusion area may, for instance, be the area of a nose or a forehead. Similarly, in step S3b, a recess focus measure is determined in a recess area of the object. For a face, the recess area may, e.g., be the area of an ear or a cheek.

A second image is captured in step S4 using the first focus setting and a second aperture size. The second aperture is different from the first aperture size. In the same way as for the first image, in step S5, the object that was detected in the first image is also detected in the second image. In step S6a, a second protrusion focus measure is determined in the protrusion area of the object in the second image. The protrusion area studied in the second image is the same as the protrusion area studied in the first image. Thus, if the nose was chosen as the protrusion area in the first image, the nose will be the protrusion area also in the second image. Similarly, in step S6b, a second recess focus measure is determined in the recess area of the object in the second image. The recess area studied in the second image is the same as the recess area studied in the first image. In other words, if an ear was chosen as the recess area in the first image, the same ear will be the recess area in the second image.

In step S7a, the difference between the first protrusion focus measure and the second protrusion focus measure is calculated, and in step S7b the difference between the first recess focus measure and the second recess focus measure is calculated. In step S8, these differences are compared, and in step S9, if the focus differences differ by less than the predetermined threshold amount, it is determined that the object is fake.

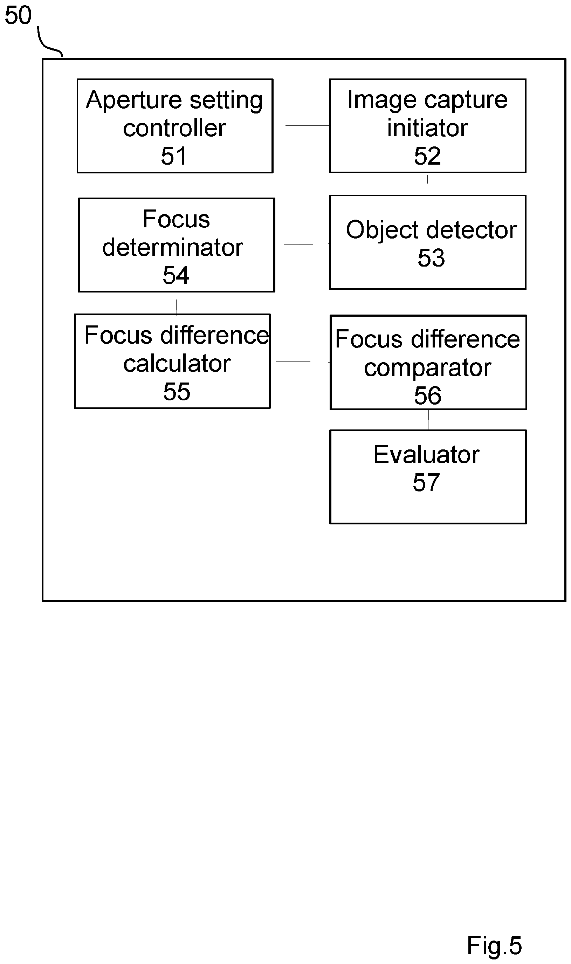

The spoofing detection methods described above may be implemented by means of a system such as the one illustrated in Fig. 5. The system 50 comprises an aperture setting controller 51, which is arranged to control the aperture size of the camera. The system 50 further comprises an image capture initiator 52, which is arranged to initiate capture of a first image, and a second image. The aperture setting controller is arranged to control the aperture size, such that the first image is captured with a first aperture size and such that the second image is captured with a second aperture size. The first and second aperture sizes are not the same. The system 50 also comprises an object detector 53. If the objects of interest are faces, then the object detector 53 may be a face detector. The object detector 53 is arranged to detect an object in the first and second images. Furthermore, the system 50 comprises a focus determinator 54. The focus determinator 54 is arranged to determine the first protrusion focus measure in the protrusion area of the object, such as nose area in a face, in the first image and to determine the corresponding second protrusion focus measure in the second image. The focus determinator 54 is also arranged to determine the first recess protrusion focus measure in the recess area of the object, such as an ear area in a face, and to determine the corresponding second recess focus measure in the second image. A focus difference calculator 55 comprised in the system 50 is arranged to calculate the protrusion focus difference between the first and second protrusion focus measures and to calculate the recess focus difference between the first and second recess focus measures. The system 50 further comprises a focus difference comparator 56, which is arranged compare the protrusion focus difference and the recess focus difference. Additionally, the system 50 comprises an evaluator 57, which is arranged to determine that the object is fake if the protrusion focus difference and the recess focus difference differ by less than a predetermined threshold amount, i.e. if the protrusion focus difference and the recess focus difference are too similar.

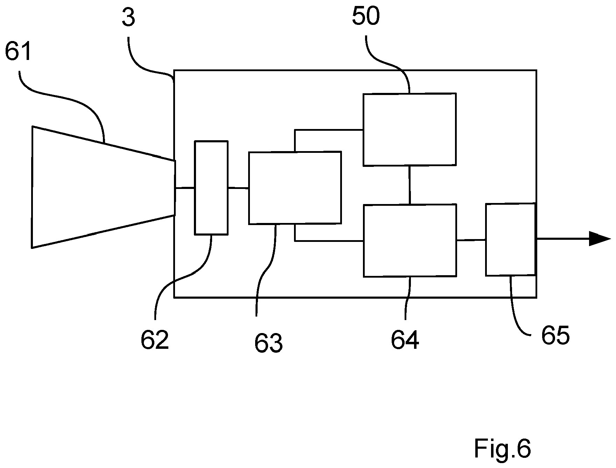

The system 50 may be integrated in the camera 3, such as exemplified in Fig. 6. In Fig. 6, only a very simplified block diagram of the camera 3 is shown. The camera 3 has other components as well, but as these are not of particular relevance to the present invention, they are not shown in the drawings and will not be further discussed here.

The camera 3 in Fig. 6 has a lens 61, and a sensor 62 for capturing images. Further, the camera has an image processor 63 for processing the captured images, an encoder 64 for encoding the images, and a network interface 65 for transmitting encoded images from the camera 3. Additionally, the camera 3 has a system 50 for detecting if an object detected in images captured by the camera 3 is fake. The system 50 may be integrated in the image processor 63, or it may be a separate module, such as shown in Fig. 6.

The camera 3 may in turn be integrated in another device, such as the door station 2 shown in Figs. 1 and 2, or it may be a standalone camera.

Instead of being integrated in the camera 3, the spoofing detection system 50 may be arranged separately, but operatively connected to the camera 3.

The spoofing detection system 50 may be embodied in hardware, firmware, or software, or any combination thereof. When embodied as software, the spoofing detection system may be provided in the form of computer code or instructions that when executed on a device having processing capabilities will implement the temperature control method described above. Such device may for instance be, or include, a central processing unit (CPU), a graphics processing unit (GPU), a custom-made processing device implemented in an integrated circuit, an ASIC, an FPGA, or logical circuitry including discrete components. When embodied as hardware, the system may comprise circuitry in the form of an arrangement of a circuit or a system of circuits. It may for example be arranged on a chip and may further comprise or be otherwise arranged together with software for performing the processing.

It will be appreciated that a person skilled in the art can modify the above-described embodiments in many ways and still use the advantages of the invention as shown in the embodiments above. As an example, the invention has so far been described in the context of a physical access control system, in which a door station employs a camera and a face detection or face recognition algorithm. However, the anti-spoofing methods and systems of the invention can be used also in other systems, such as monitoring or surveillance systems employing cameras. They may also be used in contexts where other objects than faces are detected, although this is not part of the claimed invention. As long as the detected type of object has at least one protrusion area and at least one recess area, the spoofing detection methods and systems may be used for detecting if a detected object appears to be a flat photo rather than a real three-dimensional object. For instance, looking at a car more or less from the front, the headlights and the outer rear-view mirrors are expected to be at different distances from the camera. Hence, a difference in focus measure is expected between the headlights and the rear-view mirrors if the detected car is three-dimensional and not just a photo of a car. The skilled person will realise that if the objects to study are expected to be located further away from the camera than is typically expected of a face in front of a door station, the focal length of the camera will need to be longer.

In the examples above, the person trying to gain access attempts to trick the system using a photo of a person who is authorised to enter. Instead of a photo the intruder could just as well hold a display, such as on a mobile phone or tablet, up to the camera. The display could show a still photo or a video sequence.

Thus, the invention should not be limited to the shown embodiments but should only be defined by the appended claims.

## Claims

1. A method for detecting if an object detected in a surveillance or access control system comprising a camera (3) is a two-dimensional representation and not a real three-dimensional object, the method comprising:

   capturing (S1) a first image (31) by the camera, using a first focus setting and a first aperture size,
   detecting (S2) the object (1) in the first image (31),
   determining (S3a) a first protrusion focus measure ($F_{p1}$) in a protrusion area (6) of the object in the first image,
   determining (S3b) a first recess focus measure ($F_{r1}$) in a recess area (7) of the object in the first image,
   capturing (S4) a second image (32) by the camera, using the first focus setting and a second aperture size which is different from the first aperture size,
   detecting (S5) the object (1) in the second image (32),
   determining (S6a) a second protrusion focus measure ($F_{p2}$) in a protrusion area (6) of the object in the second image,
   determining (S6b) a second recess focus measure ($F_{r2}$) in a recess area (7) of the object in the second image,
   calculating (S7a) a protrusion focus difference between the first and second protrusion focus measures,
   calculating (S7b) a recess focus difference between the first and second recess focus measures,
   comparing (S8) the protrusion focus difference and the recess focus difference, and

if the protrusion focus difference and the recess focus difference differ by less than a predetermined threshold amount, determining (S9) that the object is a two-dimensional representation and not a real three-dimensional object, wherein the object is a face (1) and wherein the protrusion area is an area corresponding to a nose area (6) of the face, and wherein the recess area is an area corresponding to an ear (7), cheek, chin, or forehead area of the face.

2. The method according to claim 1, further comprising

   determining a first additional focus measure in an additional area of the object in the first image, determining a second additional focus measure in an additional area of the object in the second image,
   calculating an additional focus difference between the first and second additional focus measures,
   comparing the additional focus difference and at least one of the protrusion focus difference and the recess focus difference, and
   if the additional focus difference and said at least one of the protrusion focus difference and the recess focus difference differ by less than a predetermined threshold amount, determining that the object is fake.

3. The method according to any one of the preceding claims, wherein the focus measures are determined using a contrast detection algorithm.

4. The method according to any one of the preceding claims, wherein the focus measures are determined using an algorithm chosen from the group consisting of a Sobel algorithm, a Laplacian algorithm, a Gaussian algorithm, a Scharr algorithm, a Roberts algorithm, a Prewitt algorithm, a Brenner algorithm, a Tenengrad algorithm, a histogram algorithm, a Vollath algorithm, a frequency analysis algorithm using FFT, and a frequency analysis algorithm using DCT.

5. The method according to claim 1 or 2, wherein the steps of determining focus measures (S3a, S3b, S6a, S6b), calculating focus differences (S7a, S7b), and comparing focus differences (S8) are performed by a neural network.

6. The method according to any one of the preceding claims, further comprising marking the second image (32) as a non-display image.

7. A system for detecting if an object detected in a surveillance or access control system comprising a camera is a two-dimensional representation and not a real three-dimensional object, the system (50) comprising:

   an aperture setting controller (51) arranged to control an aperture size of the camera,
   an image capture initiator (52) arranged to initiate capture of a first image, and a second image, wherein
   the aperture setting controller (51) is arranged to control the aperture size such that the first image is captured using a first aperture size and the second image is captured using a second aperture size, which is different from the first aperture size,
   the system (50) further comprising:

   an object detector (53) arranged to detect an object in the first and second images,
   a focus determinator (54) arranged to determine a first protrusion focus measure in a protrusion area of the object in the first image, a first recess focus measure in a recess area of the object in the first image, a second protrusion focus measure in a protrusion area of the object in the second image, and a second recess focus measure in a recess area of the object in the second image,
   a focus difference calculator (55) arranged to calculate a protrusion focus difference between the first and second protrusion focus measures, and a recess focus difference between the first and second recess focus measures,
   a focus difference comparator (56) arranged to compare the protrusion focus difference and the recess focus difference, and
   an evaluator (57) arranged to determine that the object is a two-dimensional representation and not a real three-dimensional object if the protrusion focus difference and the recess focus difference differ by less than a predetermined threshold amount, wherein the object detector (53) is a face detector, and wherein the protrusion area is an area corresponding to a nose area (6) of the face, and wherein the recess area is an area corresponding to an ear (7), cheek, chin, or forehead area of the face.

8. A camera comprising a system (50) according to claim 7.

9. A non-transitory computer readable storage medium having stored thereon instructions for implementing the method according to any one of claims 1-6, when executed on a device having processing capabilities.

**Patentansprüche**

1. Verfahren zum Erkennen, ob ein Objekt, das in einem Überwachungs- oder Zugangssteuersystem, das eine Kamera (3) umfasst, erkannt wurde, eine zweidimensionale Darstellung und kein echtes dreidimensionales Objekt ist, wobei das Verfahren Folgendes umfasst:

   Aufnehmen (S1) eines ersten Bildes (31) durch die Kamera mit Hilfe einer ersten Fokuseinstellung und einer ersten Blendengröße,
   Erkennen (S2) des Objekts (1) in dem ersten Bild (31),
   Bestimmen (S3a) eines ersten Vorsprungfokusmesswertes ($F_{p1}$) in einem Vorsprungbereich (6) des Objekts in dem ersten Bild,
   Bestimmen (S3b) eines ersten Vertiefungsfokusmesswertes ($F_{r1}$) in einem Vertiefungsbereich (7) des Objekts in dem ersten Bild,
   Aufnehmen (S4) eines zweiten Bildes (32) durch die Kamera mit Hilfe der ersten Fokuseinstellung und einer zweiten Blendengröße, die sich von der ersten Blendengröße unterscheidet,
   Erkennen(S5) des Objekts (1) in dem zweiten Bild (32),
   Bestimmen (S6a) eines zweiten Vorsprungfokusmesswertes ($F_{p2}$) in einem Vorsprungbereich (6) des Objekts in dem zweiten Bild,
   Bestimmen (S6b) eines zweiten Vertiefungsfokusmesswertes ($F_{r2}$) in einem Vertiefungsbereich (7) des Objekts in dem zweiten Bild,
   Berechnen (S7a) einer Vorsprungfokusdifferenz zwischen dem ersten und dem zweiten Vorsprungfokusmesswert,
   Berechnen (S7b) einer Vertiefungsfokusdifferenz zwischen dem ersten und dem zweiten Vertiefungsfokusmesswert,
   Vergleichen (S8) der Vorsprungfokusdifferenz und der Vertiefungsfokusdifferenz und wenn sich die Vorsprungfokusdifferenz und die Vertiefungsfokusdifferenz um weniger als einen festgelegten Grenzwert unterscheiden, Bestimmen (S9), dass das Objekt eine zweidimensionale Darstellung und kein echtes dreidimensionales Objekt ist,
   wobei das Objekt ein Gesicht (1) ist und wobei der Vorsprungbereich ein Bereich ist, der einem Nasenbereich (6) des Gesichts entspricht, und wobei der Vertiefungsbereich ein Bereich ist, der einem Ohr- (7), einem Wangen-, einem Kinn- oder einem Stirnbereich des Gesichts entspricht.

2. Verfahren nach Anspruch 1, ferner Folgendes umfassend:

   Bestimmen eines ersten zusätzlichen Fokusmesswertes in einem zusätzlichen Bereich des Objekts in dem ersten Bild,
   Bestimmen eines zweiten zusätzlichen Fokusmesswertes in einem zusätzlichen Bereich des Objekts in dem zweiten Bild,
   Berechnen einer zusätzlichen Fokusdifferenz zwischen dem ersten und dem zweiten zusätzlichen Fokusmesswert,
   Vergleichen der zusätzlichen Fokusdifferenz und der Vorsprungfokusdifferenz und/oder der Vertiefungsfokusdifferenz und,
   wenn sich die zusätzliche Fokusdifferenz und die Vorsprungfokusdifferenz und/oder die Vertiefungsfokusdifferenz um weniger als einen festgelegten Genzwert unterscheiden, Bestimmen, dass das Objekt eine Fälschung ist.

3. Verfahren nach einem der vorhergehenden Ansprüche, wobei die Fokusmesswerte mit Hilfe eines Kontrasterkennungsalgorithmus bestimmt werden.

4. Verfahren nach einem der vorhergehenden Ansprüche, wobei die Fokusmesswerte mit Hilfe eines Algorithmus bestimmt werden, der aus der Gruppe ausgewählt wird, die aus einem Sobel-Algorithmus, einem Laplace-Algorithmus, einem Gauß-Algorithmus, einem Scharr-Algorithmus, einem Roberts-Algorithmus, einem Prewitt-Algorithmus, einem Brenner-Algorithmus, einem Tenengrad-Algorithmus, einem Histogrammalgorithmus, einem Vollrath-Algorithmus, einem Frequenzanalysealgorithmus mit Hilfe von FFT und einem Frequenzanalysealgorithmus mit Hilft von DCT besteht.

5. Verfahren nach Anspruch 1 oder 2, wobei die Schritte des Bestimmens von Fokusmesswerten (S3a, S3b, S6a, S6b), des Berechnens von Fokusdifferenzen (S7a, S7b) und des Vergleichens von Fokusdifferenzen (S8) von einem neuronalen Netz ausgeführt werden.

6. Verfahren nach einem der vorhergehenden Ansprüche, ferner das Markieren des zweiten Bildes (32) als Nicht-Anzeige-Bild umfassend.

7. System zum Erkennen, ob ein Objekt, das in einem Überwachungs- oder Zugangssteuersystem, das eine Kamera umfasst, erkannt wurde, eine zweidimensionale Darstellung und kein echtes dreidimensionales Objekt ist, wobei das System (50) Folgendes umfasst:

   eine Blendeneinstellungssteuerung (51), die dafür angeordnet ist, eine Blendengröße der Kamera einzustellen,
   einen Bildaufnahmeauslöser (52), der dafür angeordnet ist, ein erstes Bild und ein zweites Bild aufzunehmen, wobei

die Blendeneinstellungssteuerung (51) dafür angeordnet ist, die Blendengröße derart zu steuern, dass das erste Bild mit Hilfe einer ersten Blendengröße aufgenommen wird und das zweite Bild mit Hilfe einer zweiten Blendengröße aufgenommen wird, die sich von der ersten Blendengröße unterscheidet,

wobei das System (50) ferner Folgendes umfasst:

einen Objektdetektor (53), der dafür angeordnet ist, in dem ersten und dem zweiten Bild ein Objekt zu erkennen,

eine Fokusbestimmungseinrichtung (54), die dafür angeordnet ist, einen ersten Vorsprungfokusmesswert in einem Vorsprungbereich des Objekts in dem ersten Bild, einen ersten Vertiefungsfokusmesswert in einem Vertiefungsbereich des Objekts in dem ersten Bild, einen zweiten Vorsprungfokusmesswert in einem Vorsprungbereich des Objekts in dem ersten Bild und einen zweiten Vertiefungsfokusmesswert in einem Vertiefungsbereich des Objekts in dem zweiten Bild zu bestimmen,

einen Fokusdifferenzrechner (55), der dafür angeordnet ist, eine Vorsprungfokusdifferenz zwischen dem ersten und dem zweiten Vorsprungfokusmesswert und eine Vertiefungsfokusdifferenz zwischen dem ersten und dem zweiten Vertiefungsfokusmesswert zu berechnen,

eine Fokusdifferenz-Vergleichseinrichtung (56), die dafür angeordnet ist, die Vorsprungfokusdifferenz und die Vertiefungsfokusdifferenz zu vergleichen, und

eine Bewertungseinrichtung (57), die dafür angeordnet ist, zu bestimmen, dass das Objekt eine zweidimensionale Darstellung und kein echtes dreidimensionales Objekt ist, wenn sich die Vorsprungfokusdifferenz und die Vertiefungsfokusdifferenz um weniger als einen festgelegten Grenzwert unterscheiden,

wobei der Objektdetektor (53) ein Gesichtsdetektor ist und wobei der Vorsprungbereich ein Bereich ist, der einem Nasenbereich (6) des Gesichts entspricht, und wobei der Vertiefungsbereich ein Bereich ist der einem Ohr-(7), einem Wangen-, einem Kinn- oder einem Stirnbereich des Gesichts entspricht.

8. Kamera, ein System (50) nach Anspruch 7 umfassend.

9. Nicht-flüchtiges computerlesbares Speichermedium, auf dem Anweisungen zum Implementieren des Verfahrens nach einem der Ansprüche 1 bis 6, wenn sie in einer Vorrichtung mit Verarbeitungsfähigkeit ausgeführt werden, gespeichert sind.

**Revendications**

1. Procédé de détection si un objet détecté dans un système de surveillance ou de contrôle d'accès comprenant une caméra (3) est une représentation bidimensionnelle et non un véritable objet tridimensionnel, ce procédé comprenant :

la capture (S1) d'une première image (31) par la caméra en utilisant un premier réglage focal et une première taille d'ouverture,

la détection (S2) de l'objet (1) dans la première image (31),

la détermination (S3a) d'une première mesure focale de saillie ($F_{p1}$) dans une zone de saillie (6) de l'objet dans la première image,

la détermination (S3b) d'une première mesure focale de retrait ($F_{r1}$) dans une zone de retrait (7) de l'objet dans la première image,

la capture (S4) d'une seconde image (32) par la caméra en utilisant le premier réglage focal et une seconde taille d'ouverture qui est différente de la première taille d'ouverture,

la détection (S5) de l'objet (1) dans la seconde image (32),

la détermination (S6a) d'une seconde mesure focale de saillie ($F_{p2}$) dans une zone de saillie (6) de l'objet dans la seconde image,

la détermination (S6b) d'une seconde mesure focale de retrait ($F_{r2}$) dans une zone de retrait (7) de l'objet dans la seconde image,

le calcul (S7a) d'une différence focale de saillie entre les première et seconde mesures focales de saillie,

le calcul (S7b) d'une différence focale de retrait entre les première et seconde mesures focales de retrait,

la comparaison (S8) de la différence focale de saillie et de la différence focale de retrait, et

si la différence focale de saillie et la différence focale de retrait diffèrent de moins d'un montant seuil prédéterminé, la détermination (S9) que l'objet est une représentation bidimensionnelle et non un véritable objet tridimensionnel,

l'objet étant un visage (1) et la zone de saillie étant une zone correspondant à une zone du nez (6) du visage, et la zone de retrait étant une zone correspondant à une zone d'oreille (7), de joue, de menton, ou de front du visage.

2. Procédé selon la revendication 1, comprenant en outre

la détermination d'une première mesure focale supplémentaire dans une zone supplémentaire de l'objet dans la première image,

la détermination d'une seconde mesure focale supplémentaire dans une zone supplémentaire de l'objet dans la seconde image,

le calcul d'une différence focale supplémentaire entre les premières et seconde mesures focales supplémentaires,

la comparaison de la différence focale supplémentaire est d'au moins une parmi la différence focale de saillie et la différence focale de retrait, et

si la différence focale supplémentaire et ladite au moins une parmi la différence focale de saillie et la différence focale de retrait un à raison d'un montant seuil prédéterminé, la détermination que l'objet est factice.

3. Procédé selon l'une quelconque des revendications précédentes, dans lequel les mesures focales sont déterminées en utilisant un algorithme de détection de contraste.

4. Procédé selon l'une quelconque des revendications précédentes, dans lequel les mesures focales sont déterminées en utilisant un algorithme choisi dans le groupe composé d'un algorithme de Sobel, d'un algorithme de Laplacian, d'un algorithme gaussien, d'un algorithme de Scharr, un algorithme de Roberts, d'un algorithme de Prewitt, d'un algorithme de Brenner, d'un algorithme de Tenengrad, d'un algorithme à histogramme, d'un algorithme de Vollath, d'un algorithme à analyse de fréquence utilisant la FFT, et d'un algorithme à analyse de fréquence utilisant la DCT.

5. Procédé selon la revendication 1 ou 2, dans lequel les étapes de détermination de mesures focales (S3a, S3b, S6a, S6b) calculant les différences focales (S7a, S7b) et comparant les différences focales (S8) sont réalisées par un réseau neuronal.

6. Procédé selon l'une quelconque des revendications précédentes, comprenant en outre le marquage de la seconde image (32) comme image sans affichage.

7. Système de détection si un objet détecté dans un système de surveillance ou de contrôle d'accès comprenant une caméra est une représentation bidimensionnelle et non un véritable objet tridimensionnel, ce système (50) comprenant :

un organe de commande de réglage d'ouverture (51) conçu pour contrôler une taille d'ouverture de la caméra,

un initiateur de capture d'images (52) conçu pour initier la capture d'une première image et d'une seconde image,

l'organe de commande de réglage d'ouverture (51) étant conçu pour contrôler la taille d'ouverture de manière à ce que la première image soit capturée en utilisant une première taille d'ouverture et la seconde image soit capturée en utilisant une seconde taille d'ouverture qui est différente de la première taille d'ouverture,

le système (50) comprenant en outre :

un détecteur d'objets (53) conçu pour détecter un objet dans la première et la seconde image,

un système de détermination focale (54) conçu pour déterminer une première mesure focale de saillie dans une zone de saillie de l'objet dans la première image, une première mesure focale de retrait dans une zone de retrait de l'objet dans la première image, une seconde mesure focale de saillie dans une zone de saillie de l'objet dans la seconde image, et une seconde mesure focale de retrait dans une zone de retrait de l'objet dans la seconde image,

un calculateur de différence focale (55) conçu pour calculer une différence focale de saillie entre les première et seconde mesures focales de saillie, et une différence focale de retrait entre les première et seconde mesures focales de retrait,

un comparateur de différence focale (56) conçue pour comparer la différence focale de saillie et la différence focale de retrait, et un évaluateur (57) conçu pour déterminer que l'objet est une représentation bidimensionnelle et non un véritable objet tridimensionnel si la différence focale de saillie et la différence focale de retrait diffèrent de moins d'un montant seuil prédéterminé,

le détecteur d'objets (53) étant un détecteur de visage et la zone de saillie étant une zone correspondant à une zone du nez (6) du visage, et la zone de retrait étant une zone correspondant à une zone d'oreille (7), de joue, de menton, ou de front du visage.

8. Caméra comprenant un système (50) selon la revendication 7.

9. Support d'enregistrement non transitoire lisible par ordinateur sur lequel sont enregistrées des instructions pour la mise en oeuvre du procédé selon l'une quelconque des revendications 1 à 6 une fois qu'elles sont exécutées sur un dispositif ayant des capacités de traitement.

1

3

2

Fig. 1

Fig.2

Fig.3

```
                    ┌─────────────────┐
                    │  Capture first  │ ╭── S1
                    │     image       │
                    └────────┬────────┘
                    ┌────────┴────────┐
                    │  Detect object  │ ╭── S2
                    └────────┬────────┘
        S3a ╮               │               ╭ S3b
    ┌───────┴───────┐       │       ┌───────┴───────┐
    │ Determine Fp1 │       │       │ Determine Fr1 │
    └───────────────┘       │       └───────────────┘
                    ┌────────┴────────┐
                    │  Capture second │ ╭── S4
                    │     image       │
                    └────────┬────────┘
                    ┌────────┴────────┐
                    │  Detect object  │ ╭── S5
                    └────────┬────────┘
      S6a ╮                 │                 ╭ S6b
    ┌─────┴─────────┐       │       ┌─────────┴─────┐
    │ Determine Fp2 │       │       │ Determine Fr2 │
    └───────┬───────┘       │       └───────┬───────┘
    ┌───────┴───────┐               ┌───────┴───────┐
    │  Calculate    │               │  Calculate    │
    │ difference    │               │ difference    │ ╮ S7b
    │  Fp1-Fp2      │               │  Fr1-Fr2      │
    └───────┬───────┘               └───────┬───────┘
  S7a ╯             ┌──────────────┐
                    │  Compare     │ ╭── S8
                    │ differences  │
                    └──────┬───────┘
                    ┌──────┴───────┐
                    │ Fake if      │ ╭── S9
                    │ differences  │
                    │ differ <δth  │
                    └──────────────┘
```

Capture first image — S1

Detect object — S2

S3a — Determine $F_{p1}$

S3b — Determine $F_{r1}$

Capture second image — S4

Detect object — S5

S6a — Determine $F_{p2}$

S6b — Determine $F_{r2}$

Calculate difference $F_{p1}-F_{p2}$ — S7a

Calculate difference $F_{r1}-F_{r2}$ — S7b

Compare differences — S8

Fake if differences differ $<\delta_{th}$ — S9

Fig.4

50

| Aperture setting controller 51 | Image capture initiator 52 |
|---|---|
| Focus determinator 54 | Object detector 53 |
| Focus difference calculator 55 | Focus difference comparator 56 |
| | Evaluator 57 |

Fig.5

61  3  50

62  63  64  65

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200218886 A
- US 20180181737 A

- EP 2680191 A

**Non-patent literature cited in the description**

- **KIM, S. ; BAN, Y. ; LEE, S.** Face Liveness Detection Using Defocus. *Sensors,* 2015, vol. 15, 1537-1563